# EUROPÄISCHE PATENTSCHRIFT

(11) **EP 1 287 040 B1**
(45) Veröffentlichungstag und Bekanntmachung des Hinweises auf die Patenterteilung: **13.04.2005**
(21) Anmeldenummer: 01919252.5
(22) Anmeldetag: 01.02.2001
(51) Int. Cl.: C08F 2/22, C08F 2/44, C08F 292/00

(54) **WÄSSRIGE PRIMÄRDISPERSIONEN, VERFAHREN ZU IHRER HERSTELLUNG UND IHRE VERWENDUNG**
AQUEOUS PRIMARY DISPERSIONS, METHOD FOR PREPARATION AND USE THEREOF
DISPERSIONS PRIMAIRES AQUEUSES, LEUR PROCEDE DE PRODUCTION ET LEUR UTILISATION

(30) Priorität: 10.02.2000 DE 10005819
(43) Veröffentlichungstag der Anmeldung: 05.03.2003
(73) Patentinhaber: BASF Coatings AG, 48165 Münster (DE)
(72) Erfinder: BENDIX, Maximilian, 59302 Oelde (DE); RINK, Heinz-Peter, 48153 Münster (DE)
(74) Vertreter: Fitzner, Uwe, Dr.
(86) Internationale Anmeldenummer: PCT/EP2001/001084
(87) Internationale Veröffentlichungsnummer: WO 2001/058963

(56) Entgegenhaltungen:
- EP-A- 0 940 459
- WO-A-99/10413
- DE-A- 19 628 143

## Beschreibung

Die vorliegende Erfindung betrifft neue wäßrige Primärdispersionen, die dispergierte und/oder emulgierte, feste und/oder flüssige Polymerpartikel und/oder dispergierte feste Kern-Schale-Partikel eines Teilchendurchmessers ≤ 500 nm enthalten. Außerdem betrifft die vorliegende Erfindung ein neues Verfahren zur Herstellung der neuen wäßrigen Primärdispersionen durch radikalische Mikro- und Miniemulsionspolymerisation. Des weiteren betrifft die vorliegende Erfindung die Verwendung der neuen wäßrigen Primärdispersionen zur Herstellung neuer Beschichtungsstoffe, Klebstoffe und Dichtungsmassen. Nicht zuletzt betrifft die vorliegende Erfindung die Verwendung der neuen Beschichtungsstoffe, Klebstoffe und Dichtungsmassen in der Automobilerst- und -reparaturlackierung, der Möbellackierung und der industriellen Lackierung, inklusive Container Coating, Coil Coating und Beschichtung elektrotechnischer Bauteile.

Mikro- und Miniemulsionen sind Dispersionen aus Wasser, einer Ölphase und einer oder mehreren oberflächenaktiven Substanzen, die eine Tröpfchengrößen von 5 bis 50 nm (Mikroemulsionen) oder von 50 bis 500 nm aufweisen. Dabei gelten Mikroemulsionen als thermodynamisch stabil, wogegen die Miniemulsionen als metastabil angesehen werden (vgl. Emulsion Polymerization and Emulsion Polymers, Editoren. P. A. Lovell und Mohamed S. El-Aasser, John Wiley and Sons, Chichester, New York, Weinheim, 1997, Seiten 700 und folgende; Mohamed S. El-Aasser, Advances in Emulsion Polymerization and Latex Technology, 30^{th} Annual Short Course, Volume 3, June 7-11, 1999, Emulsion Polymers Institute, Lehigh University, Bethlehem, Pennsylvania, U.S.A.). Beide Arten von Dispersionen finden in der Technik breite Anwendung beispielsweise in Reinigern, Kosmetika oder Körperpflegeprodukten. Sie können aber auch anstelle der üblichen Makroemulsionen, bei denen Tröpfchengrößen >1.000 nm vorliegen, für Polymerisationsreaktionen verwendet werden.

Die Herstellung wäßriger Primärdispersionen mit Hilfe der radikalischen Miniemulsionspolymerisation ist beispielsweise aus der internationalen Patentanmeldung WO 98/02466 oder den deutschen Patentschriften DE 196 28 143 A 1 und DE 196 28 142 A 2 bekannt. Bei diesen bekannten Verfahren können die Monomeren in der Gegenwart unterschiedlicher niedermolekularer, oligomerer oder polymerer hydrophober Substanzen oder Costabilisatoren copolymerisiert werden (vgl. DE 196 28 142 A 2). Außerdem können hydrophobe, in Wasser wenig lösliche organische Hilfsmittel wie Weichmacher, Verbesserer der Klebrigkeit der resultierenden Verfilmung, Filmbildehilfsmittel, d.h. Koaleszenzmittel, oder sonstige nicht näher spezifizierte organische Additive in die Monomertröpfchen der Miniemulsion eingearbeitet werden (vgl. DE 196 28 143 A 1).

Des weiteren sind wäßrige Beschichtungsstoffe auf der Basis von wäßrigen Primärdispersionen, die feste Kern-Schale-Partikel enthalten und durch Miniemulsionspolymerisation von Monomeren in der Gegenwart hydrophober Polymere hergestellt worden sind, aus den Patentschriften EP 0 401 565 A1, WO 97/49739 oder EP 0 755 946 A 1 bekannt.

Obwohl die bekannten wäßrigen Primärdispersionen und Beschichtungsstoffe bereits zahlreiche vorteilhafte Eigenschaften aufweisen, können noch immer Probleme bei der Filmbildung auftreten, die durch Anwendung der üblichen und bekannten Koaleszenzmittel in der Mikro- und Miniemulsionspolymerisation nicht in vollem Umfang behoben werden konnten. Auch die üblicherweise angewandten Costabilisatoren können noch keine befriedigende Lösung bieten.

Die nachträgliche Einarbeitung der Koaleszenzmittel in die wäßrigen Primärdispersionen kann darüber hinaus auch noch zur Koagulation der Dispersionen führen, so daß sie für anspruchsvolle Verwendungszwecke, wie die Herstellung dekorativer und/oder schützender Beschichtungen, nur noch sehr eingeschränkt oder gar nicht mehr verwendbar sind.

Die Verwendung polyhydroxyfunktionalisierter cyclischer und/oder acyclischer Alkane mit 9 bis 16 Kohlenstoffatomen im Molekül geht aus den oben genannten Patentschriften nicht hervor.

Unbefriedigende Filmbildungseigenschaften und die Gefahr der Koagulation stehen aber der breiten Verwendung der bekannten wäßrigen Primärdispersionen und der hieraus hergestellten Beschichtungsstoffe entgegen. Dies gilt auch für die entsprechenden Klebstoffe und Dichtungsmassen.

In der nicht vorveröffentlichten Patentanmeldung mit dem Aktenzeichen DE 199 59 923.8 wird die kontrollierte radikalische Mikro- und Miniemulsionspolymerisation von olefinisch ungesättigten Monomeren in der Gegenwart von Vernetzungsmitteln für die aus den Monomeren resultierenden Copolymerisate beschrieben. Die Verwendung polyhydroxyfunktionalisierter cyclischer und/oder acyclischer Alkane mit 9 bis 16 Kohlenstoffatomen im Molekül wird in der oben genannten PatentschriftEr nicht angesprochen.

Polyhydroxyfunktionalisierte cyclische und/oder acyclische Alkane mit 9 bis 16 Kohlenstoffatomen im Molekül, wie die stellungsisomeren Diethyloctandiole, sind bereits als Reaktivverdünner für die thermische Härtung in thermisch oder thermisch und mit aktinischer Strahlung härtbaren Beschichtungsstoffen (vgl. die vorveröffentlichte deutsche Patentanmeldung DE 198 09 643 A 1), in Bautenanstrichstoffen, als Reaktionsmedium für die Herstellung von Acrylatcopolymerisaten oder als Synthesebaustein für die Herstellung von Oligomeren und Polymeren verwendet worden (vgl. die nicht vorveröffentlichten Patentanmeldungen mit den Aktenzeichen DE 198 50 243, 198 55 167.3, 199 24 674.2, 199 38 758.3, 199 40 855.6 oder 199 45 574.0). Die Verwendung polyhydroxyfunktionalisierter cyclischer und/oder acyclischer Alkane mit 9 bis 16 Kohlenstoffatomen im Molekül wird weder in der oben genannten Patentschrift beschrieben noch in den nicht vorveröffentlichten Patentanmeldungen angesprochen.

Aufgabe der vorliegenden Erfindung ist es, die Filmbildungseigenschaften der bisher bekannten wäßrigen Primärdispersionen und der hieraus hergestellten Beschichtungsstoffe, Klebstoffe und Dichtungsmassen zu verbessern, so daß sie breiter angewandt werden können, als es bislang möglich war. Außerdem sollen die betreffenden Beschichtungsstoffe, Klebstoffe und Dichtungsmassen eine im Vergleich zum Stand der Technik verringerte Kochemeigung haben. Insbesondere die hieraus hergestellten Beschichtungen sollen im Vergleich zu den bekannten Beschichtungen einen höheren Glanzgrad, weniger Schleier und eine von optisch störenden Strukturen freie Oberfläche aufweisen. Dabei sollen die Vorteile der bisher bekannten wäßrigen Primärdispersionen und der hieraus hergestellten Beschichtungsstoffe, Klebstoffe und Dichtungsmassen in vollem Umfang erhalten bleiben.

Außerdem ist es die Aufgabe der vorliegenden Erfindung ein neues Verfahren der Mikro- und Miniemulsionspolymerisation olefinisch ungesättigter Monomere zu finden, das in einfacher Weise wäßrige Primärdispersionen mit einem verbesserten Eigenschaftsprofil, insbesondere mit verbesserten Filmbildungseigenschaften, liefert.

Demgemäß wurde die neuen wäßrigen Primärdispersionen, enthaltend dispergierte und/oder emulgierte, feste und/oder flüssige Polymerpartikel und/oder dispergierte feste Kern-Schale-Partikel eines Teilchendurchmessers ≤ 500 nm, herstellbar durch radikalische Mikro- oder Miniemulsionspolymerisation mindestens eines olefinisch ungesättigten Monomers (A) in der Gegenwart mindestens eines polyhydroxyfunktionalisierten cyclischen und/oder acyclischen Alkans mit 9 bis 16 Kohlenstoffatomen im Molekül, gefunden, die im folgenden als "erfindungsgemäße Primärdispersionen" bezeichnet werden.

Außerdem wurde das neue Verfahren zur Herstellung wäßriger Primärdispersionen, enthaltend dispergierte und/oder emulgierte, feste und/oder flüssige Polymerpartikel und/oder dispergierte feste Kern-Schale-Partikel eines Teilchendurchmessers ≤ 500 nm, gefunden, bei dem man mindestens ein olefinisch ungesättigtes Monomer (A) in der Gegenwart mindestens eines polyhydroxyfunktionalisierten cyclischen und/oder acyclischen Alkans mit 9 bis 16 Kohlenstoffatomen im Molekül in einer Mikro- oder Miniemulsion radikalisch (co)polymerisiert und das im folgenden als "erfindungsgemäßes Verfahren" bezeichnet wird.

Im Hinblick auf den Stand der Technik war es überraschend und für den Fachmann nicht vorhersehbar, daß die Aufgabe, die der vorliegenden Erfindung zugrunde lag, durch die erfindungsgemäßen Primärdispersionen und das erfindungsgemäße Verfahren gelöst werden konnte. Insbesondere war es überraschend, daß die erfindungsgemäß zu verwendenden polyhydroxyfunktionalisierten Alkane den Ablauf der (Co)Polymerisation nicht stören und auch nicht zu einer Koagulation der erfindungsgemäßen Primärdispersionen führen. Insbesondere war es überraschend, daß das erfindungsgemäße Verfahren die erfindungsgemäßen Primärdispersionen in besonders einfacher Weise gezielt liefert, ohne daß hierbei die vorstehend beschriebenen, vom Stand der Technik her bekannten Probleme auftreten. Dabei kann das erfindungsgemäße Verfahren in überraschend breiter Weise variiert werden, so daß erfindungsgemäße Primärdispersionen in Batch-Fahrweise hergestellt und direkt als thermisch vernetzbare Beschichtungsstoffe, Klebstoffe und Dichtungsmassen verwendet werden können.

Im Rahmen der vorliegenden Erfindung ist unter der Eigenschaft hydrophil die konstitutionelle Eigenschaft eines Moleküls oder einer funktionellen Gruppe zu verstehen, in die wäßrige Phase einzudringen oder darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, verwiesen.

Erfindungsgemäß enthalten die Primärdispersionen dispergierte und/oder emulgierte feste und/oder flüssige Polymerpartikel und/oder dispergierte feste Kern-Schale-Partikel. Die Größe der Polymerpartikel oder der dispergierten Kern-Schale-Partikel ergibt sich direkt aus dem nachfolgend beschriebenen erfindungsgemäßen Verfahren. Hierbei liegt der mittlere Teilchendurchmesser unter 500 nm. Vorzugsweise liegt er bei 10 bis 500 nm, bevorzugt 50 bis 400 nm und ganz besonders bevorzugt 100 bis 350 nm.

Die erfindungsgemäßen Primärdispersionen weisen einen vorteilhaft hohen Feststoffgehalt, beispielsweise von über 20 Gew.-%, bevorzugt über 30 Gew.-%, auf. Es können sogar Feststoffgehalte von über 40 Gew.-% erzielt werden. Die erfindungsgemäßen Primärdispersionen haben eine geringe Viskosität, auch bei hohem Feststoffgehalt, was einen weiteren besonderen Vorteil der erfindungsgemäßen Primärdispersionen und der hieraus hergestellten erfindungsgemäßen Beschichtungsstoffe, Klebstoffe und Dichtungsmassen darstellt.

Die erfindungsgemäß zu verwendenden Kern-Schale-Partikel resultieren aus der Pfropfmischpolymerisation organischer Feststoffe und der nachstehend beschriebenen erfindungsgemäß zu verwendenden Monomeren (A). Vorzugsweise handelt es sich bei den organischen Feststoffen um hydrophobe Polymere, wie sie beispielsweise in den Patentschriften EP 0 401 565 A 1, Seite 3, Zeilen 5, bis Seite 4, Zeile 50, WO 97/49739, Seite 4, Zeilen 19, bis Seite 5, Zeile 3, oder EP 0 755 946 A 1, Seite 3, Zeile 26, bis Seite 5, Zeile 38, beschrieben werden. Diese hydrophoben Polymere können auch nach dem erfindungsgemäßen Verfahren hergestellt werden.

Die erfindungsgemäßen Primärdispersionen können auch eine bimodale Teilchengrößenverteilung aufweisen, bei der 0,1 bis 80 Gew.-%, insbesondere 1,0 bis 50 Gew.-%, der aus den Monomeren (A) resultierenden (Co)Polymerisaten eine Teilchengröße, bestimmt mit einer analytischen Ultrazentrifuge, von 20 bis 500 nm, insbesondere 50 bis 300 nm haben, und 20 bis 99,9 Gew.-%, insbesondere 50 bis 99 Gew.-% des Copolymerisats, eine Teilchengröße von 200 bis 1.500 nm, insbesondere 300 bis 900 nm haben, wobei sich die Teilchengrößen um mindestens 50 nm, insbesondere um mindestens 100 nm, ganz besonders bevorzugt um mindestens 200 nm unterscheiden. Hinsichtlich der Meßmethode wird ergänzend auf die Zeilen 5 bis 9, der Seite 6 der deutschen Patentanmeldung DE 196 28 142 A 1 verwiesen.

Erfindungsgemäß werden die in den erfindungsgemäßen Primärdispersionen enthaltenen Partikel aus mindestens einem Monomeren (A) in der Gegenwart mindestens eines polyhydroxyfunktionalisierten cyclischen und/oder acyclischen Alkans mit 9 bis 16 Kohlenstoffatomen im Molekül hergestellt.

Die funktionalisierten Alkane leiten sich ab von verzweigten, cyclischen oder acyclischen Alkanen mit 9 bis 16 Kohlenstoffatomen, welche jeweils das Grundgerüst bilden.

Beispiele geeigneter Alkane dieser Art mit 9 Kohlenstoffatomen sind 2-Methyloctan, 4-Methyloctan, 2,3-Dimethyl-heptan, 3,4-Dimethyl-heptan, 2,6-Dimethyl-heptan, 3,5-Dimethyl-heptan, 2-Methyl-4-ethyl-hexan oder Isopropylcyclohexan.

Beispiele geeigneter Alkane dieser Art mit 10 Kohlenstoffatomen sind 4-Ethyloctan, 2,3,4,5-Tetramethyl-hexan, 2,3-Diethyl-hexan oder 1-Methyl-2-npropyl-cyclohexan.

Beispiele geeigneter Alkane dieser Art mit 11 Kohlenstoffatomen sind 2,4,5,6-Tetramethyl-heptan oder 3-Methyl-6-ethyl-octan.

Beispiele geeigneter Alkane dieser Art mit 12 Kohlenstoffatomen sind 4-Methyl-7-ethyl-nonan, 4,5-Diethyl-octan, 1'-Ethyl-butyl-cyclohexan, 3,5-Diethyl-octan oder 2,4-Diethyl-octan.

Beispiele geeigneter Alkane dieser Art mit 13 Kohlenstoffatomen sind 3,4-Dimethyl-5-ethyl-nonan oder 4,6-Dimethyl-5-ethyl-nonan.

Ein Beispiel eines geeigneten Alkans dieser Art mit 14 Kohlenstoffatomen ist 3,4-Dimethyl-7-ethyl-decan.

Beispiele geeigneter Alkane dieser Art mit 15 Kohlenstoffatomen sind 3,6-Diethyl-undecan oder 3,6-Dimethyl-9-ethyl-undecan.

Beispiele geeigneter Alkane dieser Art mit 16 Kohlenstoffatomen sind 3,7-Diethyl-dodecan oder 4-Ethyl-6-isopropyl-undecan.

Von diesen Grundgerüsten sind die Alkane mit 10 bis 14 und insbesondere 12 Kohlenstoffatomen besonders vorteilhaft und werden deshalb bevorzugt verwendet. Von diesen sind wiederum die Octanderivate ganz besonders vorteilhaft.

Für die Erfindung ist es vorteilhaft, wenn die funktionalisierten Alkane einen Siedepunkt von über 200, vorzugsweise 220 und insbesondere 240°C aufweisen. Darüberhinaus sollen sie eine niedrige Verdampfungsrate haben.

Für die erfindungsgemäßen Beschichtungsstoffe ist es von Vorteil, wenn die funktionalisierten Alkane acyclisch sind.

Die funktionalisierten Alkane weisen im allemeinen primäre und/oder sekundäre Hydroxylgruppen auf. Für die erfindungsgemäßen Beschichtungsstoffe ist es von Vorteil, wenn primäre und sekundäre Gruppen in einer Verbindung vorhanden sind.

Ganz besonders vorteilhafte erfindungsgemäße Beschichtungsstoffe werden erhalten, wenn die Diole stellungsisomere Dialkyloctandiole, insbesondere stellungsisomeren Diethyloctandiole, sind.

Die erfindungsgemäß zu verwendenden stellungsisomeren Diethyloctandiole enthalten eine lineare C₈-Kohlenstoffkette.

Bezüglich der beiden Ethylgruppen weist die C₈-Kohlenstoffkette das folgende Substitutionsmuster auf: 2,3, 2,4, 2,5, 2,6, 2,7, 3,4, 3,5, 3,6 oder 4,5. Erfindungsgemäß ist es von Vorteil, wenn die beiden Ethylgruppen in 2,4-Stellung stehen, d. h., daß es sich um 2,4-Diethyloctandiole handelt.

Bezüglich der beiden Hydroxylgruppen weist die C₈-Kohlenstoffkette das folgende Substitutionsmuster auf: 1,2, 1,3, 1,4, 1,5, 1,6, 1,7, 1,8, 2,3, 2,4, 2,5, 2,6, 2,7, 2,8, 3,4, 3,5, 3,6, 3,7, 3,8, 4,5, 4,6, 4,8, 5,6, 5,7, 5,8, 6,7, 6,8 oder 7,8. Erfindungsgemäß ist es von Vorteil, wenn die beiden Hydroxylgruppen in 1,5-Stellung stehen, d. h., daß es sich um Diethyloctan-1,5-diole handelt.

Die beiden Substitutionsmuster werden in beliebiger Weise miteinander kombiniert, d h., daß es sich bei den erfindungsgemäß zu verwendenden Diethyloctandiolen um
2,3-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol,
2,4-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol,
2,5-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol,
2,6- Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol,
2,7- Diethyloctan-1,2-, -1,3-, -1,4-, -1,5-, -1,6-, -1,7-, -1,8-, -2,3-, -2,4-, -2,5 -, 2-,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol,
3,4-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol,
3,5-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol,
3,6-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol oder um
4,5-Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol handelt.

Die erfindungsgemäß zu verwendenden stellungsisomeren Diethyloctandiole können als einzelne Verbindungen oder als Gemische von zwei oder mehr Diethyloctandiolen verwendet werden.

Ganz besondere Vorteile resultieren aus der Verwendung von 2,4-Diethyloctan-1,5-diol.

Die erfindungsgemäß bevorzugt verwendeten stellungsisomeren Diethyloctandiole sind an sich bekannte Verbindungen und können mit Hilfe üblicher und bekannter Synthesemethoden der Organischen Chemie wie die basenkatalysierte Aldolkondensation hergestellt werden oder sie fallen als Nebenprodukte chemischer Großsynthesen wie der Herstellung von 2-Ethylhexanol an.

Die Menge an funktonalisierten Alkanen, die bei der Herstellung der erfindungsgemäßen Primärdispersionen angewandt werden, kann sehr breit variieren und richtet sich nach den Erfordernisssen des jeweiligen Einzelfalls. D.h., nach oben ist die Menge vor allem dadurch begrenzt, daß die Bildung der Mikro- oder Miniemulsion nicht erschwert und/oder ihre Stabilität nicht verringert und/oder die (Co)Polymerisation der Monomeren (A) nicht nachteilig beeinflußt werden darf. Nach unten ist die Menge dadurch begrenzt, daß soviel an funktionalisierten Alkanen verwendet werden muß, daß sich die erfindungsgemäßen technischen Effekte zuverlässig einstellen. Vorzugsweise werden die funktionalisierten Alkane in einer Menge von, bezogen auf die Gesamtmenge der betreffenden erfindungsgemäßen Primärdispersion, 0,1 bis 20, bevorzugt 0,2 bis 18, besonders bevorzugt 0,3 bis 15, ganz besonders bevorzugt 0,4 bis 13 und insbesondere 0,5 bis 10 Gew.-% verwendet.

Die wesentliche Ausgangsverbindung für die erfindungsgemäßen Primärdispersionen und für das erfindungsgemäße Verfahren ist mindestens ein olefinisch ungesättigtes Monomer (A).

Vorzugsweise wird hierbei mindestens ein Monomer (A) verwendet, das reaktive funktionelle Gruppen (a) enthält, die mit Gruppen (a) der eigenen Art oder mit komplementären reaktiven funktionellen Gruppen (b) thermisch initiierte Vernetzungsreaktionen eingehen können. Diese Gruppen (a) oder (a) und (b) können in den aus den Monomeren (A) resultierenden (Co)Polymerisaten vorliegen, die dann selbstvernetzende Eigenschaften haben. Dem entsprechend sind auch die betreffenden erfindungsgemäßen Primärdispersionen und die hieraus hergestellten erfindungsgemäßen Beschichtungsstoffe, Klebstoffe und Dichtungsmassen selbstvernetzend.

Die komplementären reaktiven funktionellen Gruppen (b) können aber auch in den nachstehenden beschriebenen Vernetzungsmitteln vorliegen, die den erfindungsgemäßen Primärdispersionen vor, während und/oder nach ihrer Herstellung zugegeben werden. Die betreffenden erfindungsgemäßen Primärdispersionen und die hieraus hergestellten erfindungsgemäßen Beschichtungsstoffe, Klebstoffe und Dichtungsmassen sind somit fremdvemetzend.

Zu den Begriffen "selbstvernetzend" und "fremdvernetzend" wird noch ergänzend auf Römpp Lexikon Lacke und Druckfarben, Georg Thieme Verlag, Stuttgart, New York, 1998, »Härtung«, Seiten 274 bis 276, verwiesen.

Beispiele geeigneter erfindungsgemäß zu verwendender komplementärer reaktiver funktioneller Gruppen (a) und (b) sind in der folgenden Übersicht zusammengestellt. In der Übersicht steht die Variable R für einen acyclischen oder cyclischen aliphatischen, einen aromatischen und/oder einen aromatischaliphatischen (araliphatischen) Rest; die Variablen R' und R" stehen für gleiche oder verschiedene aliphatische Reste oder sind miteinander zu einem aliphatischen oder heteroaliphatischen Ring verknüpft.

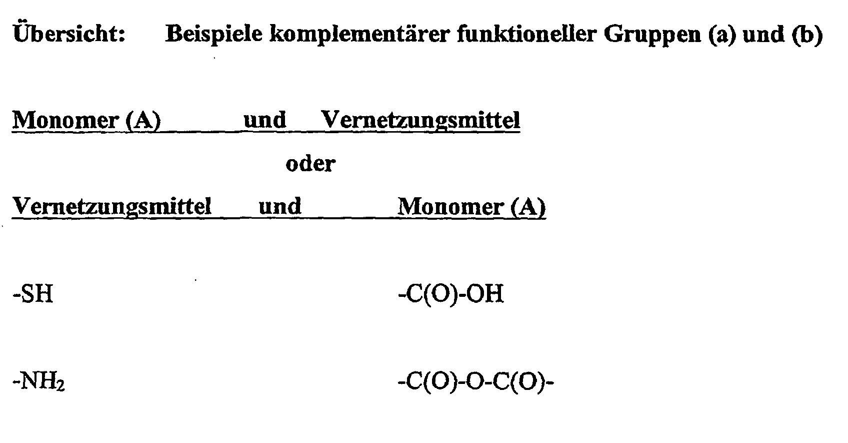

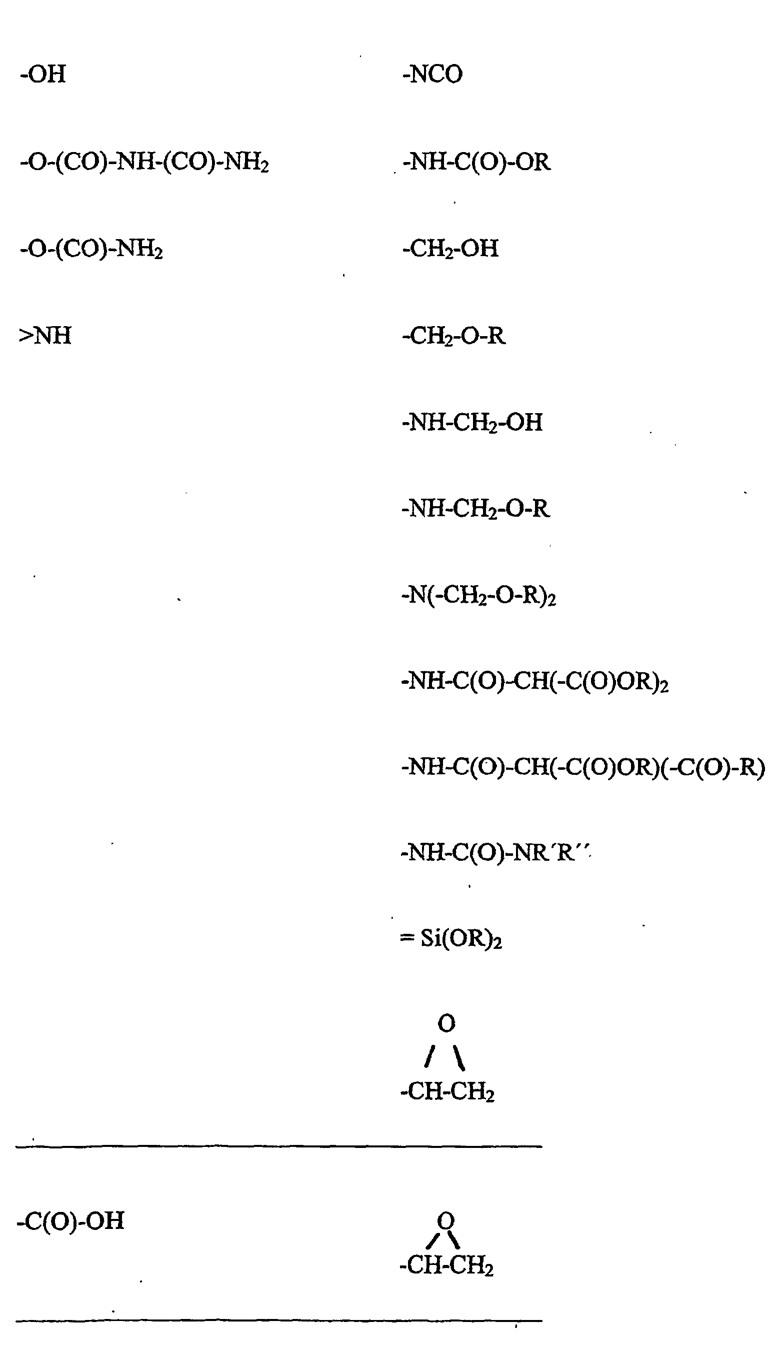

Die Auswahl der jeweiligen komplementären Gruppen (a) oder (a) und (b) richtet sich zum einen danach, daß sie bei der Lagerung erfindungsgemäßen Primärdispersionen keine unerwünschten Reaktionen eingehen und/oder gegebenenfalls eine zusätzliche Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen Beschichtungsstoffen Vernetzungstemperaturen von Raumtemperatur bis 180 °C angewandt. Es werden daher vorzugsweise Monomere (A) mit Thio-, Hydroxyl-, Methylol-, Methylolether, N-Methylol- N-Alkoxymethylamino-, Imino-, Carbamat-, Allophanat- und/oder Carboxygruppe, insbesondere aber Amino-, Alkoxymethylamino- oder Hydroxylgruppen, speziell Hydroxylgruppen, einerseits und Vernetzungsmittel mit Anhydrid-, Carboxy-, Epoxy-, blockierten Isocyanat-, Urethan-, Methylol-, Methylolether-, N-Methylol- N-Alkoxymethylamino-, Siloxan-, Amino-, Hydroxy- und/oder beta-Hydroxyalkylamidgruppen, insbesondere aber blockierte Isocyanat-, Urethanoder Methylolethergruppen, andererseits angewandt. Für die Herstellung selbstvernetzender erfindungsgemäßer Primärdispersionen werden vorzugsweise Methylol-, Methylolether, N-Methylol- N-Alkoxymethylaminogruppen eingesetzt.

Werden besonders reaktive komplementäre Gruppen (a) oder (b), wie Isocyanatgruppen verwendet, werden die sie enthaltenden Bestandteile, vorzugsweise die Vernetzungsmittel erst kurz vor der Verwendung der erfindungsgemäßen Primärdispersionen zur Herstellung der betreffenden erfindungsgemäßen Beschichtungsstoffe, Klebstoffe und Dichtungsmassen, den erfindungsgemäßen Primärdispersionen zugesetzt. Diese erfindungsgemäßen Beschichtungsstoffe, Klebstoffe und Dichtungsmassen werden von der Fachwelt auch als Zwei- oder Mehrkomponentensysteme bezeichnet.

Werden weniger reaktive komplementäre Gruppen (a) oder (b) verwendet, werden die sie enthaltenden Bestandteile vorzugsweise vor der Herstellung oder während der Herstellung den erfindungsgemäßen Primärdispersionen zugesetzt, so daß sie von vorherein in den hieraus hergestellten erfindungsgemäßen Beschichtungsstoffen, Klebstoffen und Dichtungsmassen enthalten sind. Diese erfindungsgemäßen Beschichtungsstoffe, Klebstoffe und Dichtungsmassen werden von der Fachwelt auch als Einkomponentensysteme bezeichnet.

Beispiele geeigneter Monomere (A) sind
a1) im wesentlichen säuregruppenfreien (Meth)acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobomyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)acrylsäurederivate. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder -tetra(meth)acrylat enthalten. Im Rahmen der vorliegenden Erfindung sind hierbei unter untergeordneten Mengen an höherfunktioncllen Monomeren solche Mengen zu verstehen, welche nicht zur Vernetzung oder Gelierung der Copolymerisate (A) führen.
a2) Monomere, welche mindestens eine Hydroxylgruppe, Aminogruppe, Alkoxymethylaminogruppe oder Iminogruppe pro Molekül tragen und im wesentlichen säuregruppenfrei sind, wie Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,betaolefinisch ungesättigten Carbonsäure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-indendimethanol- oder Methylpropandiolmonoacrylat, -monomethacrylat, -monoethacrylat, -monocrotonat, -monomaleinat, -monofumarat oder -monoitaconat; oder Umsetzungsprodukte aus cyclischen Estern, wie z.B. epsilon-Caprolacton und diesen Hydroxyalkyl- oder -cycloalkylestern; oder olefinisch ungesättigte Alkohole wie Allylalkohol oder Polyole wie Trimethylolpropanmono- oder diallylether oder Pentaerythritmono-, -dioder -triallylether (hinsichtlich dieser höherfunktionellen Monomeren (a2) gilt das für die höherfunktionellen Monomeren (a1) Gesagte sinngemäß); N,N-Dimethylaminoethylacrylat, N,N-Diethylaminoethylmethacrylat, Allylamin oder N-Methyliminoethylacrylat oder N,N-Di(methoxymethyl)aminoethylacrylat und -methacrylat oder N,N-Di(butoxymethyl)aminopropylacrylat und -methacrylat;
a3) Monomere, welche mindestens eine Säuregruppe, die in die entsprechende Säureaniongruppe überführbar ist, pro Molekül tragen, wie Acrylsäure, Methacrylsäure, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremono(meth)acryloyloxyethylester, Bernsteinsäuremono(meth)acryloyloxyethylester oder Phthalsäuremono(meth)acryloyloxyethylester. Im Rahmen der vorliegenden Erfindung werden die Monomeren (a3) nicht als die alleinigen Monomeren (A) verwendet, sondern stets in Verbindung mit anderen Monomeren (A) und dies auch nur in solch geringen Mengen, daß die Monomeren (a3) nicht außerhalb der Tröpfchen der Miniemulsion polymerisieren.
a4) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Düsobutylen. Die Vinylester (a4) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic®-Säuren (vgl. Römpp Lexikon Lacke und Druckfarben, Georg Thieme Verlag, Stuttgart, New York, 1998, »Versatic®-Säuren«, Seiten 605 und 606), eingesetzt.
a5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl-und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird.
a6) Cyclische und/oder acyclische Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
a7) (Meth)Acrylsäureamide wie (Meth)Acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;
a8) Epoxidgruppen enthaltende Monomere wie der Glycidylester der Acrylsäure, Methacrylsäure, Ethacrylsäure, Crotonsäure, Maleinsäure, Fumarsäure und/oder Itaconsäure.
a9) Vinylaromatische Kohlenwasserstoffe wie Styrol, alpha-Alkylstyrole, insbesondere alpha-Methylstyrol, und/oder Vinyltoluol; Vinylbenzoesäure (alle Isomere), N,N-Diethylaminostyrol (alle Isomere), alpha-Methylvinylbenzoesäure (alle Isomere), N,N-Diethylamino-alphamethylstyrol (alle Isomere) und/oder p-Vinylbenzsolsulfonsäure.
a10) Nitrile wie Acrylnitril und/oder Methacrylnitril.
a11) Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrrolidon; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
a12) Allylverbindungen, insbesondere Allylether und -ester wie Allylmethyl-, -ethyl-, -propyl- oder -butylether oder Allylacetat, -propionat oder -butyrat.
a13) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 auf den Seiten 3 bis 6, in der US 4,754,014 A 1 in den Spalten 5 bis 9, in der DE 44 21 823 A 1 oder in der internationalen Patentanmeldung WO 92/22615 auf Seite 12, Zeile 18, bis Seite 18, Zeile 10, beschrieben sind.
   und/oder
a14) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure (vgl. Monomere a2).

Weitere Beispiele geeigneter Monomere (A) gehen aus der deutschen Patentanmeldung DE 196 28 142 A 1, Seite 2, Zeile 50, bis Seite 3, Zeile 7, hervor.

Im Grunde kann jedes der vorstehend genannten Monomeren (a1) bis (a14), ausgenommen das Monomer (a3), für sich alleine polymerisiert werden. Erfindungsgemäß ist es indes von Vorteil, mindestens zwei Monomere (A) zu verwenden, weil hierdurch das Eigenschaftsprofil der resultierenden Copolymerisate in besonders vorteilhafter Weise sehr breit variiert und dem jeweiligen Verwendungszweck der erfindungsgemäßen Primärdispersionen ganz gezielt angepaßt werden kann.

Vorzugsweise werden die Monomeren (A) so ausgewählt, daß (Meth)Acrylatcopolymerisate resultieren, deren Eigenschaftsprofil in erster Linie von den vorstehend beschriebenen (Meth)Acrylaten bestimmt wird. Als Comonomer (A) werden dann bevorzugt vinylaromatische Kohlenwasserstoffe (a9), insbesondere Styrol, verwendet.

Besonders vorteilhafte erfindungsgemäße Primärdispersionen, Beschichtungsstoffe und Dichtungsmassen resultieren, wenn für die Herstellung der erfindungsgemäßen Primärdispersionen noch mindestens ein olefinisch ungesättigtes Monomer (B), das von den vorstehend beschriebenen Monomeren (A) verschieden ist, verwendet wird.

Für das erfindungsgemäße Verfahren hat die Mitverwendung von (B) noch den zusätzlichen wesentlichen Vorteil, daß es in Batch-Fahrweise durchgeführt werden kann, ohne daß hierbei eine Überhitzung der Reaktionsmischung oder gar ein Durchgehen des Reaktors eintritt.

Das erfindungsgemäß zu verwendende olefinisch ungesättigte Monomer (B) hat die allgemeine Formel I:

**R**^{**1**}**R**^{**2**}**C=CR**^{**3**}**R**^{**4**} (I).

In der allgemeinen Formel I stehen die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, iso-Butyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan, Ethylencyclohexan oder Propan-1,3-diyl-cyclohexan.

Beispiele geeigneter Cycloalkylalkylreste sind 2-, 3- oder 4-Methyl-, -Ethyl-, -Propyl- oder -Butylcyclohex-1-yl.

Beispiele geeigneter Arylreste sind Phenyl, Naphthyl oder Biphenylyl, vorzugsweise Phenyl und Naphthyl und insbesondere Phenyl.

Beispiele geeigneter Alkylarylreste sind Benzyl oder Ethylen- oder Propan-1,3-diyl-benzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, -Propyloder -Butylphen-1-yl.

Beispiele geeigneter Arylcycloalkylreste sind 2-, 3- oder 4-Cyclohexylphen-1-yl.

Die vorstehend beschriebenen Reste R¹, R², R³ und R⁴ können substituiert sein. Hierzu können elektronenziehende oder elektronenschiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; Hydroxylgruppen; und/oder primäre, sekundäre und/oder tertiäre Aminogruppen, insbesondere Amino, N-Methylamino, N-Ethylamino, N-Propylamino, N-Phenylamino, N-Cyclohexylamino, N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino.

Beispiele für besonders bevorzugt verwendete Monomere (B) sind Diphenylethylen, Dinaphthalinethylen, cis- oder trans- Stilben, Vinyliden-bis(4-N,N-dimethylaminobenzol), Vinyliden-bis(4-aminobenzol) oder Vinyliden-bis(4-nitrobenzol).

Die Monomeren (B) können einzeln oder als Gemisch aus mindestens zwei Monomeren (B) verwendet werden.

Sofern verwendet, liegt der Anteil der Monomeren (B) an dem Monomerengemisch (A) und (B), jeweils bezogen auf das Gemisch, vorzugsweise bei 0,01 bis 10, bevorzugt bei 0,1 bis 9,0, besonders bevorzugt bei 0,15 bis 8,0, ganz besonders bevorzugt 0,2 bis 7,0 und insbesondere 0,25 bis 6,0 Gew.-%.

Hinsichtlich der Reaktionsfuhrung und der Eigenschaften der resultierenden Copolymerisate, insbesondere der Acrylatcopolymerisate, ist Diphenylethylen von ganz besonderem Vorteil und wird deshalb erfindungsgemäß ganz besonders bevorzugt verwendet

Die erfindungsgemäß zu verwendenden Monomere (A) sowie gegebenenfalls (B) werden in Gegenwart mindestens eines wasser- und/oder öllöslichen, Radikale bildenden Initiators miteinander zu Copolymerisaten umgesetzt. Als Beispiele für einsetzbare Initiatoren werden genannt: Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Peroxodicarbonate wie Bis(4-tert.butylcyclohexyl)peroxydicarbonat; Kalium-, Natrium- oder Ammoniumsperoxodisulfat; Azoinitiatoren, beispielsweise Azodinitrile wie Azobisisobutyronitril; C-C-spaltende Initiatoren wie Benzpinakolsilylether; oder eine Kombination eines nicht oxidierenden Initiators mit Wasserstoffperoxid. Weitere Beispiele geeigneter Initiatoren werden in der deutschen Patentanmeldung DE 196 28 142 A 1, Seite 3, Zeile 49, bis Seite 4, Zeile 6, beschrieben. Es können auch Kombinationen dieser Initiatoren eingesetzt werden.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (A) und des Initiators, besonders bevorzugt 0,2 bis 20 Gew.-%, ganz besonders bevorzugt 0,5 bis 15 Gew.-% und insbesondere 1,0 bis 13 Gew.-% beträgt.

Ganz besonders vorteilhafte erfindungsgemäße Primärdispersionen, Beschichtungsstoffe und Dichtungsmassen resultieren, wenn die Monomeren (A) und gegebenenfalls (B) in der Gegenwart mindestens eines hydrophoben Vernetzungsmittels (co)polymerisiert werden. Vorzugsweise enthalten die hydrophoben Vernetzungsmittel die vorstehend beschriebenen reaktiven funktionellen Gruppen (a) oder (b), die mit den in den resultierenden (Co)Polymerisaten vorhandenen komplementären reaktiven funktionellen Gruppen (a) oder (b) Vernetzungsreaktionen eingehen. Die resultierenden erfindungsgemäßen Primärdispersionen enthalten die Vernetzungsmittel in besonders guter Verteilung, weswegen die Vernetzungsreaktionen besonders gut ablaufen, so daß weniger Vernetzungsmittel verwendet werden können als in den entsprechenden Dispersionen, die nach Verfahren des Standes der Technik hergestellt worden sind. Außerdem können die resultierenden erfindungsgemäßen Primärdispersionen direkt als erfindungsgemäße Beschichtungsstoffe, Klebstoffe und Dichtungsmassen verwendet werden.

Beispiele besonders gut geeigneter hydrophober Vernetzungsmittel sind blockierte Polyisocyanate, Tris(alkoxycarbonylamino)triazine oder vollständig veretherte Aminoplastharze.

Beispiele geeigneter Blockierungsmittel für die Herstellung der blockierten Polyisocyanate sind die aus der US-Patentschrift US-A-4,444,954 bekannten Blockierungsmittel:
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharostoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vü) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylinonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, insbesondere Dimethylpyrazol, oder Triazole; sowie
xvii) Gemische dieser Blockierungsmittel, insbesondere Dimethylpyrazol und Triazole, Malonester und Acetessigsäureester oder Dimethylpyrazol und Succinimid.

Beispiele geeigneter zu blockierender organischer Polyisocyanate sind insbesondere die sogenannten Lackpolyisocyanate mit aliphatisch, cycloaliphatisch, araliphatisch und/oder aromatisch gebundenen Isocyanatgruppen. Bevorzugt werden Polyisocyanate mit 2 bis 5 Isocyanatgruppen pro Molekül und mit Viskositäten von 100 bis 10.000, vorzugsweise 100 bis 5000.

Beispiele geeigneter zu blockierender Polyisocyanate sind Isocyanurat-, Biuret-, Allophanat-, Iminooxadiazindion-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden zur Herstellung der zu blockierenden Polyisocyanate aliphatische oder cycloaliphatische Diisocyanate, insbesondere Hexamethylendiisocyanat, Isophorondiisocyanat, Dicyclohexylmethan-2,4'diisocyanat, Dicyclohexylmethan-4,4'-diisocyanat, Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden insbesondere 2-Heptyl-3,4-bis(9-isocyanatononyl)-1-pentylcyclohexan; oder 1,2-, 1,4- oder 1,3-Bis(isocyanatomethyl)cyclohexan, 1,2-, 1,4-oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, 1,8-Diisocyanato-4-isocyanatomethyl-octan, 1,7-Diisocyanato-4-isocyanatomethylheptan oder 1-Isocyanato-2-(3-isocyanatopropyl)cyclohexan oder Mischungen hieraus eingesetzt.

Die Diisocanate können als solche ebenfalls zur Herstellung blockierter Diisocyanate verwendet werden. Vorzugsweise werden sie indes nicht alleine, sondern im Gemisch mit den Polyisocyanaten verwendet.

Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt.

Beispiele für besonders gut geeignete vollständig veretherte Aminoplastharze sind Melaminharze, Guanaminharze oder Harnstoffharze. Hierbei kann jedes für Klarlacke geeignete Aminoplastharz oder eine Mischung aus solchen Aminoplastharzen verwendet werden. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents", second completely revised edition, Edit. D. Stoye und W. Freitag, Wiley-VCH, Weinheim, New York, 1998, Seiten 80 ff., verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US 4 710 542 A 1 und EP 0 245 700 B 1 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Die besonders gut geeigneten Tris(alkoxycarbonylamino)triazine wiesen die folgende Formel auf:

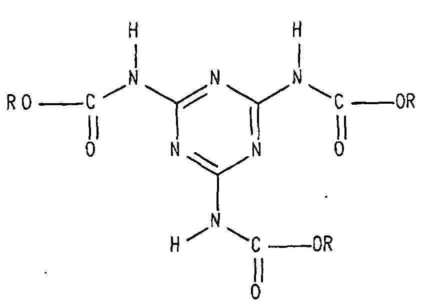

Beispiele für besonders gut geeignete Tris(alkoxycarbonylamino)triazine werden in den Patentschriften US 4,939,213 A 1, US 5,084,541 A 1 oder der EP 0 624 577 A 1 beschrieben. Insbesondere werden die Tris(methoxy-, Tris(butoxyund/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Von den vorstehend beschriebenen Vernetzungsmitteln bieten die blockierten Polyisocyanate besondere Vorteile und werden deshalb erfindungsgemäß ganz besonders bevorzugt verwendet.

Bei dem erfindungsgemäßen Verfahren kann das Verhältnis der Monomeren (A), die komplementäre reaktive funktionelle Gruppen (a) oder (b) enthalten, zu den Vernetzungsmitteln sehr breit variieren. Erfindungsgemäß ist es von Vorteil, wenn das Molverhältnis von komplementären reaktiven funktionellen Gruppen (a) oder (b) in (A) zu komplementären reaktiven funktionellen Gruppen (a) oder (b) in den Vernetzungsmitteln bei 5,0 : 1,0 bis 1,0 : 5,0, bevorzugt 4,0 : 1,0 bis 1,0 : 4,0, besonders bevorzugt 3,0 : 1,0 bis 1,0 : 3,0 und insbesondere 2,0 : 1 bis 1 : 2,0 liegt. Besondere Vorteile resultieren, wenn das Molverhältnis bei etwa oder genau 1,0 : 1,0 liegt.

Neben den vorstehend beschriebenen hydrophoben Vemetzungsmitteln können bei der (Co)Polymerisation der erfindungsgemäß zu verwendenden Monomeren (A) sowie gegebenenfalls (B) auch noch von den Vernetzungsmitteln verschiedene hydrophobe Verbindungen zugegen sein. Diese hydrophoben Verbindungen werden von der Fachwelt auch als Costabilisatoren bezeichnet.

Bei den hydrophoben Verbindungen handelt es sich um wasserunlösliche niedermolekulare, oligomere oder polymere Substanzen. Beispiele geeigneter hydrophober Verbindungen sind Ester von 3 bis 6 Kohlenstoffatomen aufweisenden alpha,beta-monoolefinisch ungesättigten Carbonsäuren mit Alkoholen mit 12 bis 30 Kohlenstoffatomen im Alkylrest; Ester von Vinylund/oder Allylalkohol mit 12 bis 30 Kohlenstoffatome im Molekül aufweisenden Alkanmonocarbon-, sulfon- und/oder phosphonsäuren; Amide von 3 bis 6 Kohlenstoffatome aufweisenden alpha,beta-monoolefinisch ungesättigten Carbonsäuren mit Alkylamuinen mit 12 bis 30 Kohlenstoffatomen im Alkylrest; Makromomere auf der Basis olefinisch ungesättigter Verbindungen mit im statstischen Mittel mindestens einer, insbesondere endständigen, olefinisch ungesättigten Gruppe im Molekül; Polysiloxanmakromonomere mit im statistischen Mittel mindestens einer, insbesondere endständigen, olefinisch ungesättigten Gruppe im Molekül; oligomere und/oder polymere Polymerisations-, Polykondensations- und/oder Polyadditionsprodukte; wasserunlösliche Molekulargewichtsregler, insbesondere Mercaptane; aliphatische, cycloaliphatische und/oder aromatische halogenierte und/oder nicht halogenierte Kohlenwasserstoffe; Alkanole und/oder Alkylamine mit mindestens 12 Kohlenstoffatomen im Alkylrest; Organosilane und/oder -siloxane; pflanzliche, tierische, halbsynthetische und/oder synthetische Öle; hydrophobe Farbstoffe.

Weiterer Beispiele geeigneter hydrophober Verbindungen bzw. Costabilisatoren sowie die Mengen, in denen sie vorteilhafterweise angewandt werden, sind aus der deutschen Patentanmeldung DE 196 28 142 A 1, Seite 4, Zeilen 37 bis 59, bekannt.

Des weiteren können die erfindungsgemäß zu verwendenden Monomeren (A) sowie gegebenenfalls (B) in der Gegenwart von Emulgatoren und/oder Schutzkolloiden (co)polymerisiert werden. Beispiele geeigneter Emulgatoren und/oder Schutzkolloide sowie die Mengen, in denen sie vorteilhafterweise angewandt werden, gehen aus der deutschen Patentanmeldung DE 196 28 142 A 1, Seite 3, Zeilen 8 bis 48, hervor.

Hinsichtlich der Molekulargewichtsverteilung ist das aus den Monomeren (A) sowie gegebenenfalls (B) gebildete (Co)Polymerisat keinerlei Beschränkungen unterworfen. Vorteilhafterweise wird aber die (Co)Polymerisation so geführt, daß eine Molekulargewichtsverteilung Mw/Mn gemessen mit Gelpermeationschromatographie unter Verwendung von Polystyrol als Standard von ≤ 12, besonders bevorzugt ≤ 10 und insbesondere ≤ 7 resultiert.

Werden die Comonomeren (B) mit verwendet, ergibt sich als noch ein weiterer zusätzlicher Vorteil, daß nämlich die Molekulargewichte der Copolymerisate durch die Wahl des Verhältnisses von Monomer (A) zu Monomer (B) zu radikalischem Initiator in weiten Grenzen steuerbar sind. Dabei bestimmt insbesondere der Gehalt an Monomer (B) das Molekulargewicht, und zwar derart, daß je größer der Anteil an Monomer (B) ist, desto geringer ist das erhaltene Molekulargewicht

Als Reaktoren für die (Co)Polymerisationsverfahren kommen die üblichen und bekannten Rührkessel, Rührkesselkaskaden, Rohrreaktoren, Schlaufenreaktoren oder Taylorreaktoren, wie sie beispielsweise in den Patentschriften DE 1 071 241 B 1 oder EP 0 498 583 A 1 oder in dem Artikel von K. Kataoka in Chemical Engineering Science, Band 50, Heft 9, 1995, Seiten 1409 bis 1416, beschrieben werden, in Betracht. Vorzugsweise wird die radikalische Copolymerisation in Rührkesseln oder Taylorreaktoren, durchgeführt, wobei die Taylorreaktoren so ausgelegt werden, daß auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt.

Erfindungsgemäß wird die Copolymerisation in einem wäßrigen Medium durchgeführt.

Das wäßrige Medium enthält im wesentlichen Wasser. Hierbei kann das wäßrige Medium außer den vorstehend im Detail beschriebenen Vernetzungsmitteln sowie gegebenenfalls hydrophoben Verbindungen und/oder Emulgatoren und/oder Schutzkolloiden übliche und bekannte Lackadditive und/oder sonstige gelöste feste, flüssige oder gasförmige organische und/oder anorganische, niederund/oder hochmolekulare Stoffe enthalten, sofern diese nicht die (Co)Polymerisation in negativer Weise beeinflussen oder gar hemmen. Im Rahmen der vorliegenden Erfindung ist unter dem Begriff "untergeordnete Menge" eine Menge zu verstehen, welche den wäßrigen Charakter des wäßrigen Mediums nicht aufhebt.

Bei dem wäßrigen Medium kann es sich aber auch um reines Wasser handeln.

Die (Co)Polymerisation wird vorteilhafterweise bei Temperaturen oberhalb der Raumtemperatur durchgeführt, wobei bevorzugt ein Temperaturbereich von 30 bis 95°C, ganz besonders bevorzugt 50 bis 90°C, gewählt wird.

Bei Verwendung besonders leicht flüchtiger Monomere (A) sowie gegebenenfalls (B) kann die (Co)Polymerisation auch unter Druck, vorzugsweise unter 1,5 bis 3.000 bar, besonders bevorzugt 5 bis 1.500 und insbesondere 10 bis 1.000 bar durchgeführt werden. Hierbei können in Einzelfällen auch höhere Temperaturen als 95°C angewandt werden.

Hierbei erweist sich als besonderer Vorteil des erfindungsgemäßen Verfahrens, daß es auch in batch-Fahrweise durchgeführt werden kann. Ansonsten können auch die in der deutschen Patentanmeldung DE 196 28 142 A 1, Seite 4, Zeilen 6 bis 36, beschriebenen Fahrweisen angewandt werden.

Erfindungsgemäß wird die (Co)Polymerisation in einer Mikro- oder Miniemulsion, insbesondere einer Miniemulsion, durchgeführt. Hierbei liegt der mittlere Teilchendurchmesser der emulgierten Monomertröpfchen unter 500 nm. Vorzugsweise liegt er bei 10 bis 500 nm, bevorzugt 50 bis 400 nm und ganz besonders bevorzugt 100 bis 350 nm. Bei dem Teilchendurchmesser handelt es sich um den sogenannten z-mittleren Teilchendurchmesser, der mittels der Photonenkorrelationsspektroskopie nach dem Prinzip der dynamischen, quasielastischen Lichtstreuung bestimmt wird. Hierfür kann beispielsweise ein Coulter N4 Plus Particle Analyzer der Firma Coulter Scientific Instruments oder ein PCS Malvern Zetasizer 1000 benutzt werden. Üblicherweise wird die Messung an einer wäßrigen Emulsion, welche 0,01 Gew.-% der emulgierten Monomertröpfchen enthält, durchgeführt. Die wäßrigen Emulsion enthält des weiteren in der wäßrigen Phase die entsprechenden Monomeren in gelöster Form (bis zur Sättigung), damit sich die emulgierten Monomertröpfchen nicht auflösen.

Das erfindungsgemäße Verfahren kann so ausgeführt werden, daß die vorstehend beschriebene bimodale Teilchengrößenverteilung resultiert. Verfahren zur Herstellung bimodaler Teilchengrößenverteilungen sind auf dem hier in Rede stehenden technologischen Gebiet üblich und bekannt. Vorzugsweise wird das in der deutschen Patentanmeldung DE-A-196 28 142, Seite 5, Zeilen 31 bis 49, beschriebene Saat-Verfahren angewandt.

Die Herstellung der Miniemulsion im Rahmen des erfindungsgemäßen Verfahrens weist keine methodischen Besonderheiten auf, sondern erfolgt nach den üblichen und bekannten Verfahren der Dispergierung oder Emulgierung in einem hohen Scherfeld. Beispiele geeigneter Verfahren werden in den Patentschriften DE 196 28 142 A 1, Seite 5, Zeilen 1 bis 30, DE 196 28 143 A 1, Seite 7, Zeilen 30 bis 58, oder EP0 401 565 A 1, Zeilen 27 bis 51, beschrieben.

Die erfindungsgemäßen Primärdispersionen dienen der Herstellung der erfindungsgemäßen Beschichtungsstoffe, Klebstoffe und Dichtungsmassen oder werden direkt als solche verwendet, was ein wesentlicher Vorteil der erfindungsgemäßen Primärdispersionen ist.

Bevorzugt werden sie als erfindungsgemäße Beschichtungsstoffe, besonders bevorzugt als Füller, Unidecklacke, Wasserbasislacke und Klarlacke, ganz besonders bevorzugt als Klarlacke, verwendet. Für diese Verwendungszwecke kann den erfindungsgemäßen Primärdispersionen vor, während und/oder nach ihrer Herstellung noch mindestens ein übliches und bekanntes Lackadditiv in wirksamen Mengen zugesetzt werden. Hierbei werden vor oder während der Herstellung der erfindungsgemäßen Primärdispersionen nur solche Lackadditive zugesetzt, die die Miniemulsionspolymerisation nicht stören oder gar ganz inhibieren. Der Fachmann kann solche Lackadditive anhand seines allgemeinen Fachwissens identifizieren. Vorzugsweise werden die genannten Lackadditive nach der Herstellung der erfindungsgemäßen Primärdispersionen zugesetzt.

Beispiele geeigneter Lackadditive sind Pigmente, wie sie in Römpp Lexikon Lacke und Druckfarben, Georg Thieme Verlag, 1998, Seiten 176, »Effektpigmente«; Seiten 380 und 381 »Metalloxid-Glimmer-Pigmente« bis »Metallpigmente«; Seiten 180 und 181, »Eisenblau-Pigmente« bis »Eisenoxidschwarz«; Seiten 451 bis 453, »Pigmente« bis »Pigmentsvolumenkonzentration«; Seite 563, »Thioindigo-Pigmente«; und Seite 567, »Titandioxid-Pigmente«; beschrieben werden. Diese Additive werden verwendet, wenn die erfindungsgemäßen Beschichtungsstoffe als Füller, Unidecklacke oder Wasserbasislacke, insbesondere aber als Wasserbasislacke im Rahmen des sogenannten Naß-in-naß-Verfahrens (vgl. beispielsweise das europäische Patent EP 0 089 497 B 1) zur Herstellung farb- und/oder effektgebender Mehrschichtlackierungen verwendet werden. Sie entfallen naturgemäß, wenn die erfindungsgemäßen Beschichtungsstoffe als Klarlacke, beispielsweise im Rahmen des Naß-in-naß-Verfahrens verwendet werden.

Weitere Beispiele geeigneter Lackadditive, die sowohl in den pigmentierten Lacken als auch in den nicht pigmentierten verwendet werden können, sind oligomere und polymere, thermisch härtbare, lineare und/oder verzweigte und/oder blockartig, kammartig und/oder statistisch aufgebaute Poly(meth)acrylate oder Acrylatcopolymerisate, insbesondere die in der Patentschrift DE 197 36 535 A 1 beschriebenen, Polyester, insbesondere die in den Patentschriften DE 40 09 858 A 1 oder DE 44 37 535 A 1 beschriebenen, Alkyde, acrylierte Polyester, Polylactone, Polycarbonate, Polyether, Epoxidharz-Amin-Addukte, (Meth)Acrylatdiole, partiell verseifte Polyvinylester, Polyurethane und acrylierte Polyurethane, wie die in den Patentschriften EP 0 521 928 A 1, EP 0 522 420 A 1, EP 0 522 419 A 1, EP 0 730 613 A 1 oder DE 44 37 535 A 1 beschriebenen, oder Polyharnstoffe Weitere Beispiele geeigneter Additive sind organische und anorganische Füllstoffe, thermisch härtbare Reaktiverdünner, niedrig siedende und/oder hochsiedende organische Lösemittel ("lange Lösemittel"), UV-Absorber, Lichtschutzmittel, Radikalfänger, thermolabile radikalische Initiatoren, Katalysatoren für die Vernetzung, Entlüftungsmittel, Slipadditive, Polymerisationsinhibitoren, Entschäumer, Emulgatoren, Netzmittel, Haftvermittler, Verlaufmittel, filmbildende Hilfsmittel, rheologiesteuernde Additive oder Flammschutzmittel. Weitere Beispiele geeigneter Lackadditive werden in dem Lehrbuch »Lackadditive« von Johan Bieleman, Wiley-VCH, Weinheim, New York, 1998, beschrieben.

Sollen die erfindungsgemäßen Beschichtungsstoffe auch mit aktinischer Strahlung härtbar sein (Dual Cure), enthalten sie Additive, die mit aktinischer Strahlung härtbar sind. Bei der aktinischen Strahlung kann es sich um elektromagnetische Strahlung wie nahes Infrarot (NIR), sichtbares Licht, UV-Licht oder Röntgenstrahlung oder um Korpuskularstrahlung wie Elektronenstrahlung handeln. Beispiele geeigneter mit aktinischer Strahlung härtbarer Additive sind aus dem deutschen Patent DE 197 09 467 C 1 bekannt.

Die vorstehend beschriebenen Lackadditive können auch in den erfindungsgemäßen Klebstoffen und Dichtungsmassen enthalten sein, sofern sie sich für diese Anwendungszwecke eignen, was der Fachmann anhand seines allgemeinen Fachwissens feststellen kann.

Methodisch weist die Applikation der erfindungsgemäßen Beschichtungsstoffe keine Besonderheiten auf, sondern kann durch alle üblichen Applikationsmethoden, wie z.B. Spritzen, Rakeln, Streichen, Gießen, Tauchen, Träufeln oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Als Substrate kommen alle zu lackierenden Oberflächen, die durch eine Härtung der hierauf befindlichen Lackierungen unter Anwendung von Hitze sowie gegebenenfalls von aktinischer Strahlung nicht geschädigt werden, in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien. Demnach ist der erfindungsgemäße Beschichtungsstoff auch für Anwendungen außerhalb der Automobillackierung geeignet. Hierbei kommt er insbesondere für die Lackierung von Möbeln und die industrielle Lackierung, inklusive Coil Coating, Container Coating und die Imprägnierung oder Beschichtung elektrotechnischer Bauteile, in Betracht. Im Rahmen der industriellen Lackierungen eignet er sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert, geklebt oder abgedichtet werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Auch die Härtung der applizierten erfindungsgemäßen Beschichtungsstoffe weist keine methodischen Besonderheiten auf, sondern erfolgt nach den üblichen und bekannten thermischen Methoden wie Erhitzen in einem Umluftofen oder Bestrahlen mit IR-Lampen, die im Falle von Dual Cure noch durch die Bestrahlung mit aktinischer Strahlung ergänzt werden kann. Hierbei können Strahlenquellen wie Quecksilberhoch- oder -niederdruckdampflampen, welche gegebenenfalls mit Blei dotiert sind, um ein Strahlenfenster bis zu 405 nm zu öffnen, oder Elektronenstrahlquellen angewandt werden.

Die resultierenden erfindungsgemäßen Beschichtungen, insbesondere die erfindungsgemäßen ein- oder mehrschichtigen farb- und/oder effektgebenden Lackierungen und Klarlackierungen, sind einfach herzustellen und weisen auch unter extremen klimatischen Bedingungen hervorragende optische Eigenschaften und eine sehr hohe Chemikalien- und Witterungsbeständigkeit auf. Sie sind daher im Innen- und Außenbereich verwendbar.

Die aus den erfindungsgemäßen Klebstoffen und Dichtungsmassen hergestellten erfindungsgemäßen Klebschichten und Dichtungen haben auch unter extremen klimatischen Bedingungen eine hervorragende Klebkraft und Dichtungsfähigkeit auch über lange Zeiträume hinweg. Auch sie sind im Innen- und Außenbereich verwendbar.

Daher zeichnen sich auch die erfindungsgemäßen grundierten und ungrundierten Substrate, insbesondere Karosserien von Automobilen und Nutzfahrzeugen, industrielle Bauteile, inklusive Kunststoffteile, Emballagen, Coils und elektrische Bauteile, oder Möbel, die mit mindestens einer erfindungsgemäßen Beschichtung beschichtet, mit mindestens einer erfindungsgemäßen Dichtung abgedichtet und/oder mit mindestens einem erfindungsgemäßen Klebstoff verklebt sind, durch besondere technische und wirtschaftliche Vorteile, insbesondere eine lange Gebrauchsdauer, aus, was sie für die Anwender besonders attraktiv macht.

### Beispiel

### Die Herstellung einer erfindungsgemäßen Klarlackierung

### 1. Die erfindungsgemäße Primärdispersion:

200,3 Gewichtsteile eines festen mit 3,5-Dimethylpyrazol blockierten handelsüblichen Polyisocyanats wurden in einer Lösung, bestehend aus 99 Gewichtsteilen Methylmethacrylat, 118 Gewichtsteilen n-Butylacrylat, 49,5 Gewichtsteilen Styrol, 106,6 Gewichtsteilen Hydroxypropylmethacrylat, 7,6 Gewichtsteilen Diphenylethylen und 19 Gewichtsteilen 2,4-Diethyloctan-1,5-diol unter Rühren mit einem Laborrührer gelöst. Zu resultierenden homogenen Lösung wurden unter Rühren 35,1 Gewichtsteile des handelsüblichen Initiators Perkadox® 16S der Firma Akzo Nobel Chemicals GmbH (Bis(4-tert.butylcyclohexyl)peroxydicarbonat) zugegeben. Anschließend wurde zur resultierenden Lösung unter Rühren eine Lösung von 16 Gewichtsteilen des handelsüblichen Emulgators Abex® EP 110 der Firma Rhone Poulenc Surfactants & Specialties in 848,9 Gewichtsteilen deionisiertem Wasser zugegeben. Die Präemulsion wurde zunächst mit einem Ultraturrax während 30 Sekunden bei 10.000 U/min dispergiert und anschließend durch 5minütiges Dispergieren mittels eines Druckentspannungshomogenisators bei einem Druck von 200 bar in eine feinteilige Miniemulsion (z-mittlere Teilchengröße: 215 nm; gemessen mit einem PCS Malvem Zetasizer 1000) überführt.

### 2. Die Polymerisation der Miniemulsion 1:

Die Miniemulsion 1 wurde in einen 5 kg-Stahlreaktor überführt und während einer Stunde bei einer konstanten Temperatur von 70°C gehalten. Das resultierende Miniemulsionscopolymerisat wies einen Feststoffgehalt von 40,1 Gew.-% (30 Minuten/130°C) und eine z-mittlere Teilchengröße von 247 nm (gemessen mit einem PCS Malvern Zetasizer 1000) auf. Es war völlig frei von Koagulat und absetztstabil.

### 3. Der erfindungsgemäße Klarlack:

Das Miniemulsioncopolymerisat 2 wurde durch Zugabe von 22,5 Gewichtsteilen des handelsüblichen Verdickungsmittels Collacral® VL der Firma BASF Aktiengesellschaft und 15 Gewichtsteilen des handelsüblichen Verlaufmittels Byk® 348 der Firma Byk Chemie GmbH spritzfertig eingestellt.

### 4. Die erfindungsgemäße Klarlackierung:

Der Klarlack 3 wurde pneumatisch auf Prüftafeln, die mit einer Elektrotauchlackierung, hergestellt aus einem handelsüblichen kathodischen Elektrotauchlack der Firma BASF Coatings AG (Cathoguard®), einer 13 µm starken Füllerlackierung, hergestellt aus einem handelsüblichen wäßrigen Füller der BASF Coatings AG (Ecoprime®), und einer 14 µm starken farb- und effektgebenden Basislackierung, hergestellt aus einem handelsüblichen Wasserbasislack der Firma BASF Coatings AG (Ecostar®), beschichten waren, appliziert, während 5 Minuten bei Raumtemperatur und während 10 Minuten der 80°C abgelüftetUnd während 30 Minuten bei 150 °C Objekttemperatur eingebrannt. Es resultierte eine erfindungsgemäßen Mehrschichtlackierung mit einer von Kochern freien Klarlackierung einer Stärke von 57 µm, die einen sehr guten Verlauf und einen sehr guten optischen Gesamteindruck aufwies:

### 4.1 Welligkeit:

Die Welligkeit der erfindungsgemäßen Klarlackierung wurde mit Hilfe der Wavescan-Methode gemessen. Zu diesem Zweck wurde ein Laserstrahl unter einem Winkel von 60° auf die Oberfläche gerichtet, und es wurde auf einer Meßstecke von 10 cm die Schwankungen des reflektierten Lichts mit Hilfe eines Meßgeräts registriert.

Im sogenannten long wave-Bereich (0,6 bis 10 mm; Beobachtungabstand: 2,5 m) wurde ein Wert von 10,4 ermittelt. Somit waren so gut wie keine Orangenhautstrukturen oder andere Störungen in der Lackierung vorhanden.

Im sogenannten short wave-Bereich (0,1 bis 0,6 mm; Beobachtungsabstand: 45 cm) wurde ein Wert von 45,9 ermittelt. Somit waren, wenn überhaupt, nur wenige Feinstrukturen in dieser Größenordnung in der Oberfläche vorhanden.

### 4.2 Glanz und Haze:

Glanz und Haze wurden reflektometrisch unter einem Winkel von 20° mit einem Reflektometer der Firma BYK gemessen. Die erfindungsgemäße Klarlackierung wies einen Glanz von 82,7 und einen Haze von 50,6 auf und entsprach damit auch in dieser Hinsicht den Anforderungen der Praxis.

## Patentansprüche

1. Verfahren zur Herstellung wäßriger Primärdispersionen, enthaltend dispergierte und/oder emulgierte, feste und/oder flüssige Polymerpartikel und/oder dispergierte feste Kern-Schale-Partikel eines Teilchendurchmessers ≤ 500 nm, bei dem man mindestens ein olefinisch ungesättigtes Monomer (A) in der Gegenwart mindestens eines polyhydroxyfunktionalisierten cyclischen und/oder acyclischen Alkans mit 9 bis 16 Kohlenstoffatomen im Molekül in einer Mikro- oder Miniemulsion radikalisch (co)polymerisiert.

2. Wäßrige Primärdispersion, enthaltend dispergierte und/oder emulgierte, feste und/oder flüssige Polymerpartikel und/oder dispergierte feste Kem-Schale-Partikel eines Teilchendurchmessers ≤ 500 nm, herstellbar durch ein Verfahren nach Anspruch 1.

3. Primärdispersion nach Anspruch 2,
**dadurch gekennzeichnet, daß** das Alkan mit zwei Hydroxylgruppen funktionalisiert ist.

4. Primärdispersion nach Anspruch 1 oder 3,
**dadurch gekennzeichnet, daß** das funktionalisierte Alkan acyclisch ist.

5. Primärdispersion nach einem der Ansprüche 1, 3 oder 4,
**dadurch gekennzeichnet, daß** das funktionalisierte Alkan primäre und/oder sekundäre, insbesondere primäre und sekundäre, Hydroxylgruppen aufweist.

6. Primärdispersion nach einem der Ansprüche 1 oder 3 bis 5,
**dadurch gekennzeichnet, daß** die funktionalisierten Alkane stellungsisomere Dialkyloctandiole sind.

7. Primärdispersion nach Anspruch 6,
**dadurch gekennzeichnet, daß** die stellungsisomeren Dialkyloctandiole stellungsisomere Diethyloctandiole sind.

8. Primärdispersion nach Anspruch 7,
**dadurch gekennzeichnet, daß** das stellungsisomere Diethyloctandiol ein 2,3-, 2,4-, 2,5-, 2,6-, 2,7-, 3,4-, 3,5-, 3,6- oder 4,5-Diethyloctandiol ist.

9. Primärdispersion nach Anspruch 8,
**dadurch gekennzeichnet, daß** das stellungsisomere Diethyloctandiol ein 2,4-Diethyloctandiol ist.

10. Primärdispersion nach einem der Ansprüche 7 bis 9,
**dadurch gekennzeichnet, daß** das stellungsisomere Diethyloctandiol ein Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol ist.

11. Primärdispersion nach Anspruch 10,
**dadurch gekennzeichnet, daß** das stellungsisomere Diethyloctandiol ein Diethyloctan-1,5-diol ist.

12. Primärdispersion nach Anspruch 11,
**dadurch gekennzeichnet, daß** das stellungsisomere Diethyloctandiol 2,4-Diethyloctan-1,5-diol ist.

13. Primärdispersion nach einem der Ansprüche 1 oder 3 bis 12,
**dadurch gekennzeichnet, daß** das Monomer (A) mit mindestens einem von (A) verschiedenen olefinisch ungesättigten Monomer (B) der allgemeinen Formel I
**R**^{**1**}**R**^{**2**}**C=CR**^{**3**}**R**^{**4**} (I),
worin die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen; copolymerisiert wird.

14. Primärdispersion nach einem der Ansprüche 1 oder 3 bis 13,
**dadurch gekennzeichnet, daß** die radikalische Mikro- oder Miniemulsionspolymerisation in der Gegenwart mindestens eines hydrophoben Vernetzungsmittels für das aus dem Monomer (A) oder den Monomeren (A) sowie gegebenenfalls aus den Monomeren (B) resultierende (Co)Polymerisat durchgeführt wird.

15. Primärdispersionen nach einem der Ansprüche 1 oder 3 bis 14,
**dadurch gekennzeichnet, daß** es sich bei den dispergierten Teilchen um Kern-Schale-Partikel mit Kernen aus organischen Feststoffen und mit Schalen aus Polymerisaten, welche mindestens ein Monomer (A) und gegebenenfalls mindestens ein Monomer (B) einpolymerisiert enthalten, handelt.

16. Primärdispersionen nach einem der Ansprüche 1 oder 3 bis 15,
**dadurch gekennzeichnet, daß** die Kerne der Kern-Schale-Partikel durch radikalische Mikro- oder Miniemulsionspolymerisation hergestellt werden.

17. Verwendung der Primärdispersionen gemäß einem der Ansprüche 2 bis 16 für die Herstellung von Beschichtungsstoffen, Klebstoffen und Dichtungsmassen.

18. Verwendung nach Anspruch 17,
**dadurch gekennzeichnet, daß** die Beschichtungsstoffe, Klebstoffe und Dichtungsmassen in der Automobilerst- und -reparaturlackierung, der Möbellackierung und der industriellen Lackierung, inclusive Coil Coating, Container Coating und Beschichtung elektrotechnischer Bauteile zum Beschichten, Verkleben und Abdichten von grundierten und ungrundierten Substraten.

## Claims

1. Process for preparing aqueous primary dispersions comprising dispersed and/or emulsified, solid and/or liquid polymer particles and/or dispersed solid core-shell particles having a diameter ≤ 500 nm, in which at least one olefinically unsaturated monomer (A) is subjected to free-radical (co)polymerization in a microemulsion or miniemulsion in the presence of at least one polyhydroxy-functionalized cyclic and/or acyclic alkane having from 9 to 16 carbon atoms in the molecule.

2. Aqueous primary dispersion comprising dispersed and/or emulsified, solid and/or liquid polymer particles and/or dispersed solid core-shell particles having a diameter ≤ 500 nm, preparable by a process according to Claim 1.

3. Primary dispersion according to Claim 2, **characterized in that** the alkane is functionalized with two hydroxyl groups.

4. Primary dispersion according to Claim 1 or 3, **characterized in that** the functionalized alkane is acyclic.

5. Primary dispersion according to one of Claims 1, 3 or 4, **characterized in that** the functionalized alkane contains primary and/or secondary, especially primary and secondary, hydroxyl groups.

6. Primary dispersion according to one of Claims 1 or 3 to 5, **characterized in that** the functionalized alkanes are positionally isomeric dialkyloctanediols.

7. Primary dispersion according to Claim 6, **characterized in that** the positionally isomeric dialkyloctanediols are positionally isomeric diethyloctanediols.

8. Primary dispersion according to Claim 7, **characterized in that** the positionally isomeric diethyloctanediol is a 2,3-, 2,4-, 2,5-, 2,6-, 2,7-, 3,4-, 3,5-, 3,6- or 4,5-diethyloctanediol.

9. Primary dispersion according to Claim 8, **characterized in that** the positionally isomeric diethyloctanediol is a 2,4-diethyloctanediol.

10. Primary dispersion according to one of Claims 7 to 9, **characterized in that** the positionally isomeric diethyloctanediol is a diethyloctane-1,2-, -1,3-, -1,4-, -1,5-, -1,6-, -1,7-, -1,8-, -2,3-, -2,4-, -2,5-, -2,6-, -2,7-, -2,8-, -3,4-, -3,5-, -3,6-, -3,7-, -3,8-, -4,5-, -4,6-, -4,7-, -4,8-, -5,6-, -5,7-, -5,8-, -6,7-, -6,8- or -7,8-diol.

11. Primary dispersion according to Claim 10, **characterized in that** the positionally isomeric diethyloctanediol is a diethyloctane-1,5-diol.

12. Primary dispersion according to Claim 11, **characterized in that** the positionally isomeric diethyloctanediol is 2,4-diethyloctane-1,5-diol.

13. Primary dispersion according to one of claims 1 or 3 to 12, **characterized in that** the monomer (A) is copolymerized with at least one olefinically unsaturated monomer (B) which is different from (A) and is of the general formula I
**R**^{**1**}**R**^{**2**}**C=CR**^{**3**}**R**^{**4**} (I)
in which the radicals R¹, R², R³ and R⁴ independently of one another are in each case hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³ and R⁴ are substituted or unsubstituted aryl, arylalkyl or arylcycloalkyl radicals, especially substituted or unsubstituted aryl radicals.

14. Primary dispersion according to one of claims 1 or 3 to 13, **characterized in that** the free-radical microemulsion or miniemulsion polymerization is conducted in the presence of at least one hydrophobic crosslinking agent for the (co)polymer resulting from the monomer (A) or from the monomers (A) and also, where appropriate, from the monomers (B).

15. Primary dispersion according to one of claims 1 or 3 to 14, **characterized in that** the dispersed particles are core-shell particles comprising cores of organic solids and shells of polymers containing at least one monomer (A) and, where appropriate, at least one monomer (B) in copolymerized form.

16. Primary dispersion according to one of claims 1 or 3 to 15, **characterized in that** the cores of the core-shell particles are prepared by free-radical microemulsion or miniemulsion polymerization.

17. Use of the primary dispersions according to one of Claims 2 to 16 for preparing coating materials, adhesives and sealing compounds.

18. Use according to Claim 17, **characterized in that** the coating materials, adhesives and sealing compounds are used in automotive OEM finishing and refinishing, in furniture coating and in industrial coating, including coil coating, container coating and the coating of electrical components, for the coating, bonding and sealing of primed and unprimed substrates.

## Revendications

1. Procédé de préparation de dispersions primaires aqueuses qui contiennent des particules polymères dispersées et/ou émulsionnées, solides et/ou liquides, et/ou des particules solides dispersées à coeur et enveloppe, d'un diamètre ≤ 500 nm, dans lequel on polymérise ou copolymérise par voie radicalaire en microémulsion ou miniémulsion au moins un monomère oléfiniquement insaturé (A) en présence d'au moins un alcane polyhydroxyfonctionnalisé, cyclique et/ou acyclique, qui compte de 9 à 16 atomes de carbone dans sa molécule.

2. Dispersion primaire aqueuse qui contient des particules polymères dispersées et/ou émulsionnées, solides et/ou liquides, et/ou des particules solides dispersées à coeur et enveloppe, d'un diamètre ≤ 500 nm, qui peut être préparée par un procédé selon la revendication 1.

3. Dispersion primaire selon la revendication 2, **caractérisée en ce que** l'alcane est fonctionnalisé avec deux groupes hydroxyle.

4. Dispersion primaire selon la revendication 1 ou 3, **caractérisée en ce que** l'alcane fonctionnalisé est acyclique.

5. Dispersion primaire selon les revendications 1, 3 ou 4, **caractérisée en ce que** l'alcane fonctionnalisé présente des groupes hydroxyle primaires et/ou secondaires et en particulier des groupes hydroxyle primaires et secondaires.

6. Dispersion primaire selon l'une quelconque des revendications 1 ou 3 à 5, **caractérisée en ce que** les alcanes fonctionnalisés sont des dialkyloctanediols à isomérie de position.

7. Dispersion primaire selon la revendication 6, **caractérisée en ce que** les dialkyloctanediols à isomérie de position sont des diéthyloctanediols à isomérie de position.

8. Dispersion primaire selon la revendication 7, **caractérisée en ce que** le diéthyloctanediol à isomérie de position est un 2,3-, 2,4-, 2,5-, 2,6-, 2,7-, 3,4-, 3,5-, 3,6- ou 4,5-diéthyloctanediol.

9. Dispersion primaire selon la revendication 8, **caractérisée en ce que** le diéthyloctanediol à isomérie de position est un 2,4-diéthyloctanediol.

10. Dispersion primaire selon l'une quelconque des revendications 7 à 9, **caractérisée en ce que** le diéthyloctanediol à isomérie de position est un diéthyloctane -1,2-, -1,3-, -1,4-, -1,5-, -1,6-, -1,7-, -1,8-, -2,3-, -2,4-, -2,5-, -2,6-, -2,7-, -2,8-, -3,4-, -3,5-, -3,6-, -3,7-, -3,8-, -4,5-, -4,6-, -4,7-, -4,8-, -5,6-, -5,7-, -5,8-, -6,7-, -6,8- ou -7,8-diol.

11. Dispersion primaire selon la revendication 10, **caractérisée en ce que** le diéthyloctanediol à isomérie de position est un diéthyloctane-1,5-diol.

12. Dispersion primaire selon la revendication 11, **caractérisée en ce que** le diéthyloctanediol à isomérie de position est un 2,4-diéthyloctane-1,5-diol.

13. Dispersion primaire selon l'une quelconque des revendications 1 ou 3 à 12, **caractérisée en ce que** le monomère (A) est copolymérisé avec au moins un monomère oléfiniquement insaturé (B) différent de (A), de formule générale:
R¹R²C=CR³R⁴ (I)
dans laquelle les radicaux R¹, R², R³ et R⁴ représentent, chacun indépendamment les uns des autres, des atomes d'hydrogène ou des radicaux substitués ou non substitués d'alkyle, de cycloalkyle, d'alkylcycloalkyle, de cycloalkylalkyle, d'aryle, d'alkylaryle, de cycloalkylaryle, d'arylalkyle ou d'arylcycloalkyle avec la condition qu'au moins deux des variables R¹, R², R³ et R⁴ représentent des radicaux substitués ou non substitués d'aryle, d'arylakyle ou d'arylcycloalkyle et en particulier des radicaux substitués ou non substitués d'aryle.

14. Dispersion primaire selon l'une quelconque des revendications 1 ou 3 à 13, **caractérisée en ce que** la polymérisation radicalaire en microémulsion ou miniémulsion est réalisée en présence d'au moins un agent de réticulation hydrophobe pour le polymère ou copolymère qui résulte du monomère (A) ou des monomères (A) ainsi que le cas échéant des monomères (B).

15. Dispersions primaires selon l'une quelconque des revendications 1 ou 3 à 14, **caractérisées en ce que** les particules dispersées sont des particules à coeur et enveloppe dont les coeurs sont constitués de solides organiques et l'enveloppe de polymères qui contiennent sous forme polymérisée au moins un monomère (A) et le cas échéant au moins un monomère (B).

16. Dispersions primaires selon l'une quelconque des revendications 1 ou 3 à 15, **caractérisées en ce que** les coeurs des particules à coeur et enveloppe sont préparés par polymérisation radicalaire en microémulsion ou en miniémulsion.

17. Utilisation des dispersions primaires selon l'une quelconque des revendications 2 à 16 pour la préparation de substances de revêtement, d'adhésifs et de pâtes d'étanchéité.

18. Utilisation selon la revendication 17, **caractérisée en ce que** les substances de revêtement, les adhésifs et les pâtes d'étanchéité sont utilisés dans la peinture d'origine et de réparation d'automobiles, la peinture de meubles et la peinture industrielle, notamment le revêtement en continu, la peinture de conteneurs et le revêtement de composants électrotechniques, pour le revêtement, le collage et la réalisation de l'étanchéité de supports dotés ou non d'une couche de fond.
